# EUROPÄISCHE PATENTSCHRIFT

(11) **EP 2 634 464 B1**
(45) Veröffentlichungstag und Bekanntmachung des Hinweises auf die Patenterteilung: **24.12.2014**
(21) Anmeldenummer: 12157387.7
(22) Anmeldetag: 28.02.2012
(51) Int. Cl.: F16K 11/078, F16K 27/04

(54) **Einhandhebelmischerkartusche**
Single hand lever mixer cartridge
Cartouche de mélangeur à levier à une main

(43) Veröffentlichungstag der Anmeldung: 04.09.2013
(73) Patentinhaber: Flühs Drehtechnik GmbH, 58515 Lüdenscheid (DE)
(72) Erfinder: Lange, Lutz, 58511 Lüdenscheid (DE)
(74) Vertreter: Dörner, Kötter & Kollegen

(56) Entgegenhaltungen:
- EP-A1- 0 075 323
- EP-A1- 0 590 427
- EP-A1- 0 637 709
- EP-A2- 1 310 711
- DE-A1- 3 244 120

## Beschreibung

Die Erfindung betrifft eine Einhandhebelmischerkartusche gemäss den im Oberbegriff von Anspruch 1 definierten Merkmalen, wie sie beispielsweise aus EP-A-1 310 711 bekannt ist.

In Sanitärarmaturen werden häufig Mischerkartuschen eingesetzt, in denen eine eine Steuerscheibe sowie eine Durchlassscheibe aufweisende Scheibensteuerung angeordnet ist, welche über einen einzigen Hebel derart bedienbar ist, dass sowohl die Wassermenge, als auch die Wassertemperatur über ein und denselben Hebel steuerbar ist. Derartige austauschbare Kartuschen können in unterschiedlich gestalteten Armaturengehäusen eingesetzt werden. In einigen Anwendungsgebieten kommen auch modifizierte Kartuschen zum Einsatz, bei denen ein konstantes Mischungsverhältnis eingestellt ist, wobei die Drehbewegung des Hebels blockiert ist, sodass nur über die Schwenkbewegung des Hebels eine Einstellung der Wassermenge erfolgen kann. Diese Ausführung kommt auch in solchen Anwendungsgebieten zum Einsatz, in denen nur ein Zulaufkanal in der Armatur vorhanden ist.

Bei der Gestaltung von Armaturengehäusen besteht zunehmend der Wunsch nach einem möglichst kleinen Aufbau. Daher ist es erforderlich, die Mischerkartuschen klein und kompakt aufzubauen, wobei gleichzeitig die Anforderung nach einer großen Wassermenge gegeben ist. Mischerkartuschen sind regelmäßig aus Kunststoffspritzgussteilen zusammengesetzt, wobei aufgrund der kleinen Dimensionierung der Bauteile, verbunden mit großzügig dimensionierten Durchlassöffnungen für den Wasserdurchtritt bereichsweise nur geringe Materialstärken vorhanden sind. Gleichzeitig bestehen hohe Anforderungen an die Dichtheit der Mischerkartuschen. Hierzu kommen überstehende Flachdichtungen oder auch O-Ringe zum Einsatz. Die Dichtwirkung wird über eine Verspannung der Mischerkartusche gegen den Grund einer Armatur bewirkt.

Mischerkartuschen der vorgenannten Art bestehen aus vielen Einzelteilen, die jeweils bestimmte Fertigungstoleranzen aufweisen. In ungünstigen Fällen kann dies zu einem ungleichmäßigen Andruck der eingesetzten Dichtungen kommen, was zu Beeinträchtigungen der Dichtwirkung führen kann.

Hier will die Erfindung Abhilfe schaffen. Der Erfindung liegt die Aufgabe zugrunde, eine Einhandhebelmischerkartusche der vorgenannten Art zu schaffen, bei der auch bei ungünstigen Additionen von Fertigungstoleranzen und hierdurch bewirkten ungleichmäßigen Andruckkräften eine zuverlässige Dichtwirkung gewährleistet ist. Gemäß der Erfindung wird diese Aufgabe durch die Merkmale des Patentanspruchs 1 gelöst. Weiterbildungen bzw. vorteilhafte Ausgestaltungen der Erfindung sind in den abhängigen Ansprüchen angegeben.

Ein Ausführungsbeispiel der Erfindung ist in den Zeichnungen dargestellt und wird nachfolgend im Einzelnen beschrieben. Es zeigen:

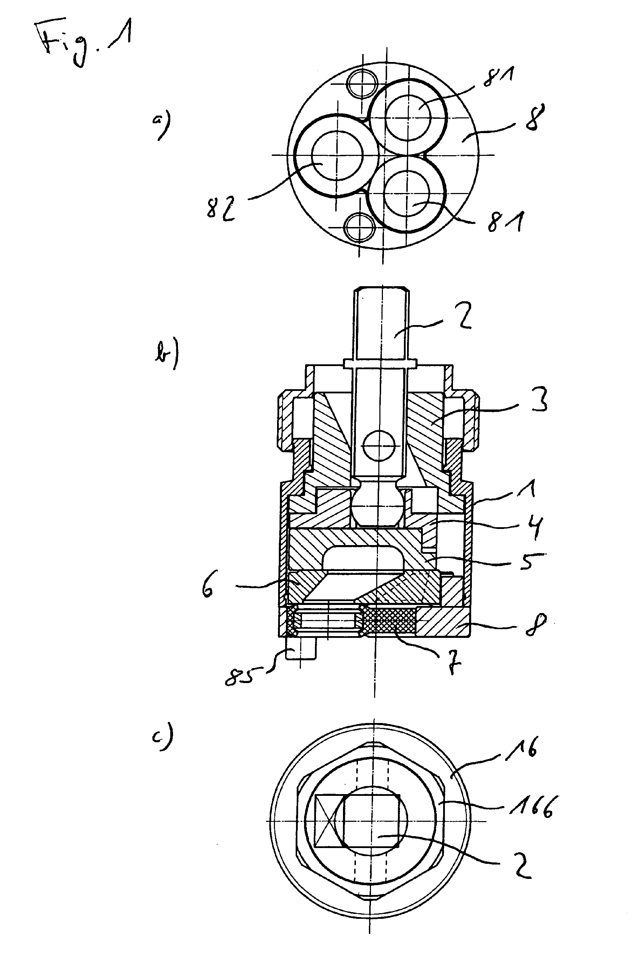

- Figur 1: die schematische Darstellung einer Einhandhebelmischerkartusche (geschlossene Stellung)
a) in der Ansicht von unten,
b) im Längsschnitt,
c) in der Draufsicht;
- Figur 2: die Einhandhebelmischerkartusche aus Figur 1 in geöffneter Stellung (ohne Befestigungsring)
a) in der Ansicht von unten,
b) im Längsschnitt;

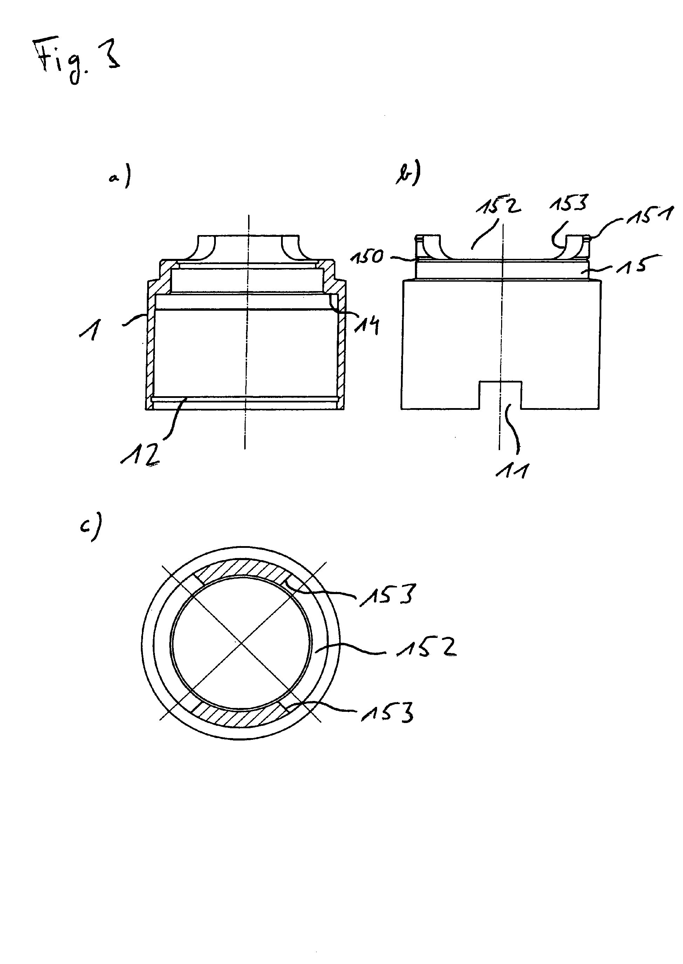

- Figur 3: die schematische Darstellung des Kopfstücks der Mischerkartusche aus Figur 1
a) im Längsschnitt
b) in der Seitenansicht (um 90° verdreht),
c) im Querschnitt;

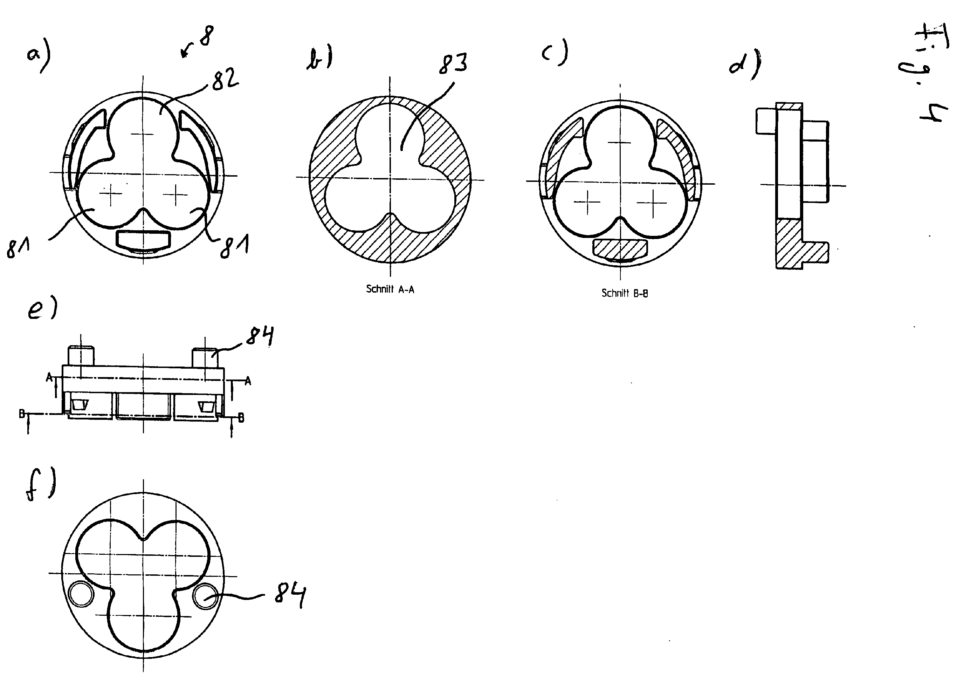

- Figur 4: die Darstellung des Bodenstücks der Mischerkartusche aus Figur 1
a) in der Draufsicht,
b) im Schnitt A-A der Darstellung aus a),
c) im Schnitt B-B der Darstellung aus a),
d) im Längsschnitt,
e) in der Seitenansicht,
f) in der Ansicht von unten;

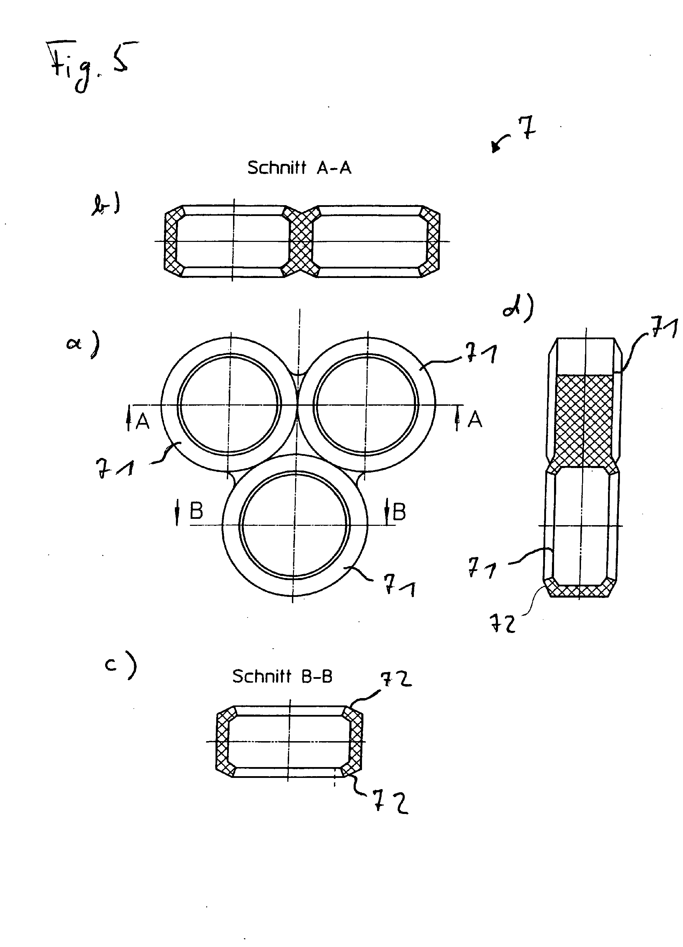

- Figur 5: die Darstellung des Lippendichtungsformteils der Mischerkartusche aus Figur 1
a) in der Draufsicht,
b) im Schnitt A-A der Darstellung aus a),
c) im Schnitt B-B der Darstellung aus a),
d) im Querschnitt;

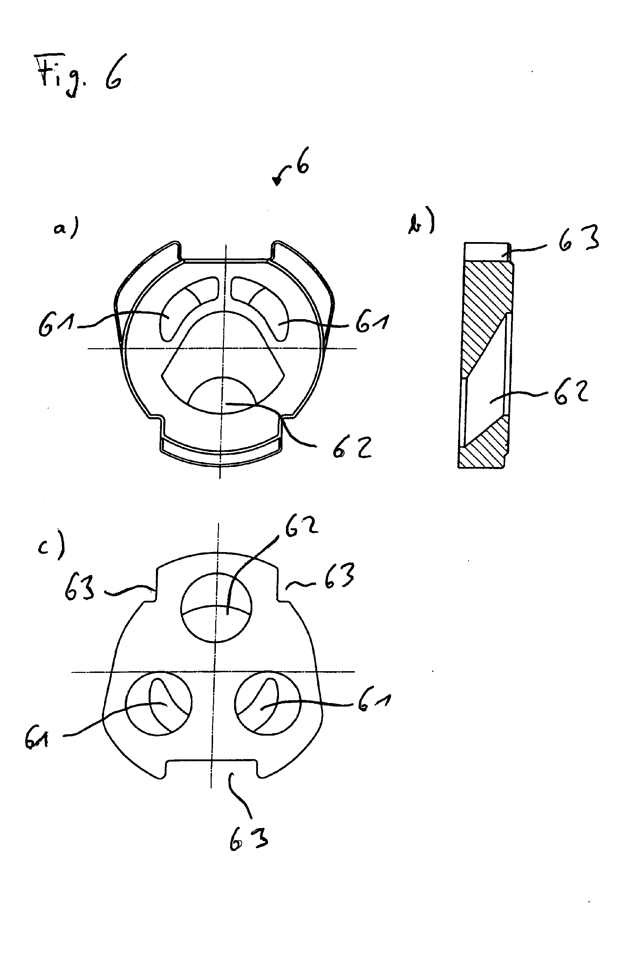

- Figur 6: die Darstellung der Durchlassscheibe der Mischerkartusche aus Figur 1
a) in der Ansicht von unten,
b) im Querschnitt,
c) in der Draufsicht;

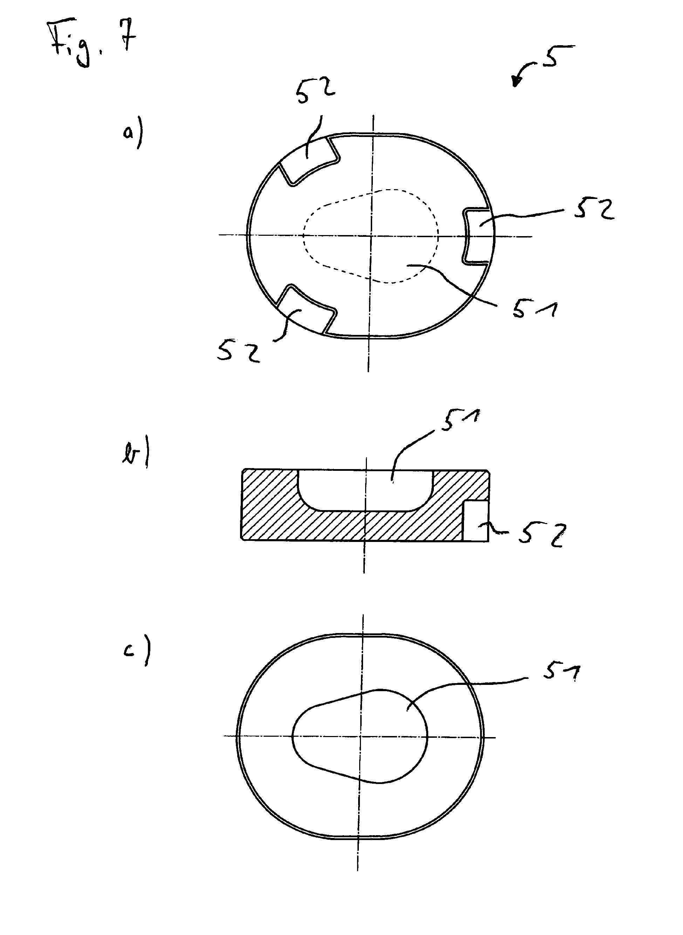

- Figur 7: die Darstellung der Steuerscheibe der Mischerkartusche aus Figur 1
a) in der Ansicht von unten,
b) im Querschnitt,
c) in der Draufsicht;

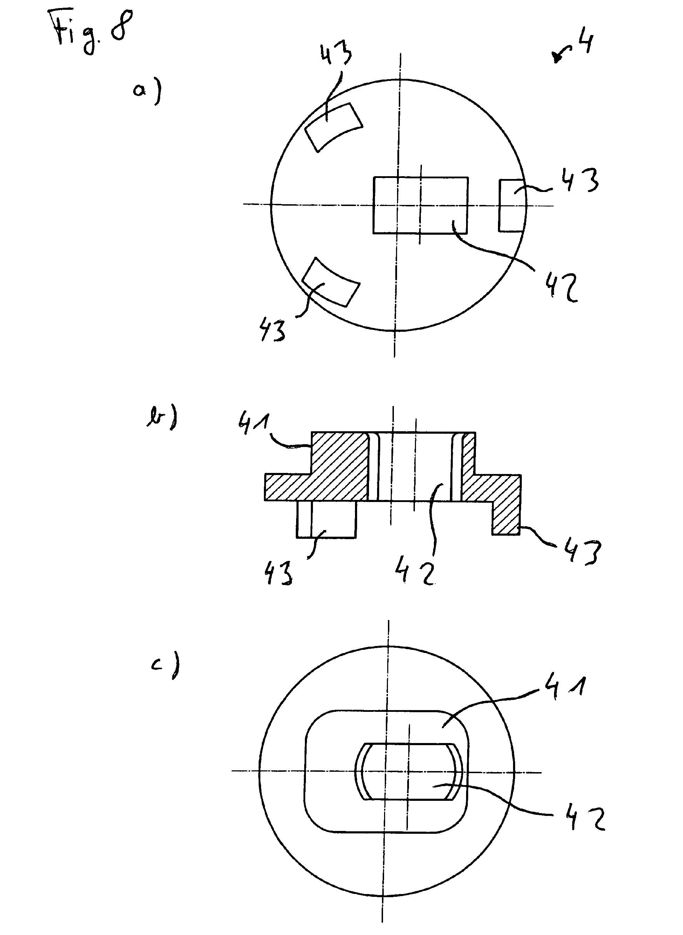

- Figur 8: die Darstellung des Gleitstücks der Mischerkartusche aus Figur 1
a) in der Ansicht von unten,
b) im Querschnitt,
c) in der Draufsicht;
- Figur 9: die Scheibensteuerung der Mischerkartusche aus Figur 1 mit Steuerscheibe und Durchlassscheibe in der Position "geschlossen";
- Figur 10: die Scheibensteuerung aus Figur 9 in der Position "Mischwasser";
- Figur 11: die Scheibensteuerung aus Figur 9 in der Position "Kaltwasser";

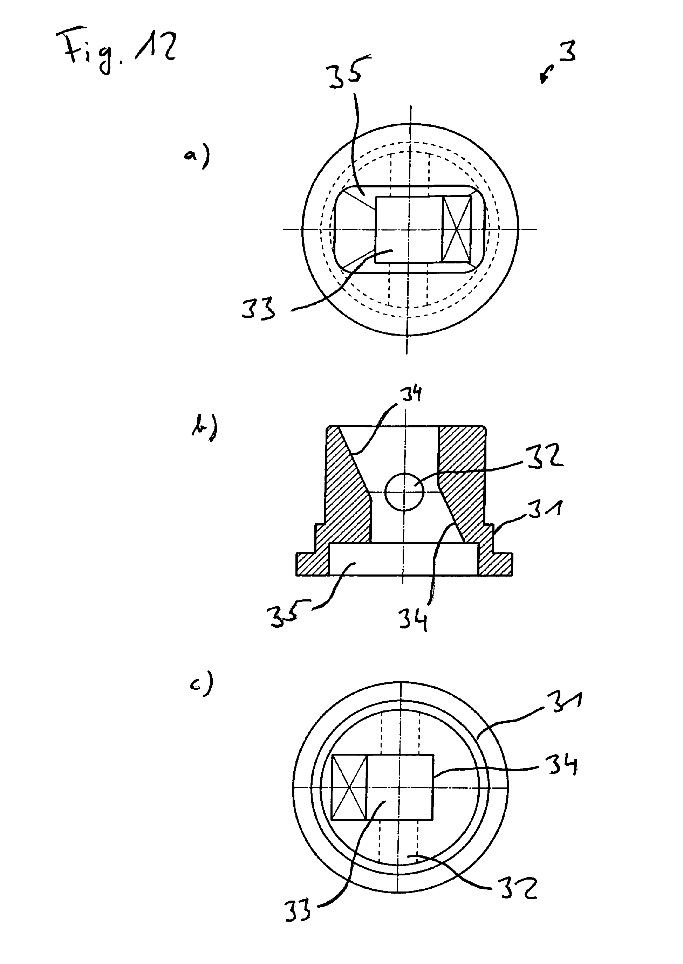

- Figur 12: die Spindelaufnahme der Mischerkartusche aus Figur 1
a) in der Ansicht von unten,
b) im Querschnitt,
c) in der Draufsicht;

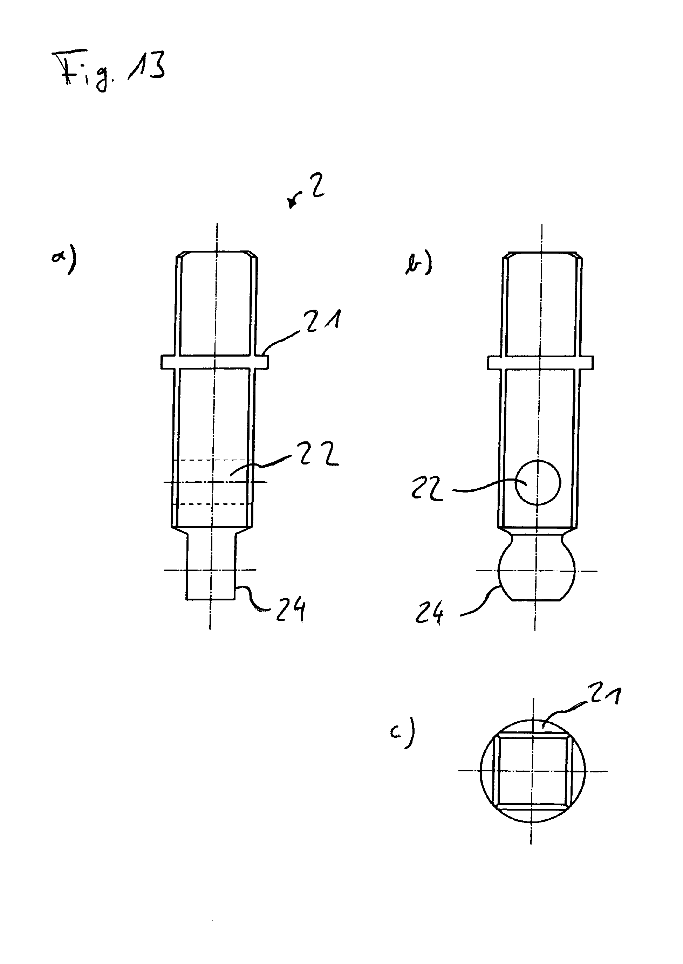

- Figur 13: die Spindel der Mischerkartusche aus Figur 1
a) in der Seitenansicht,
b) in der Vorderansicht,
c) in der Draufsicht;

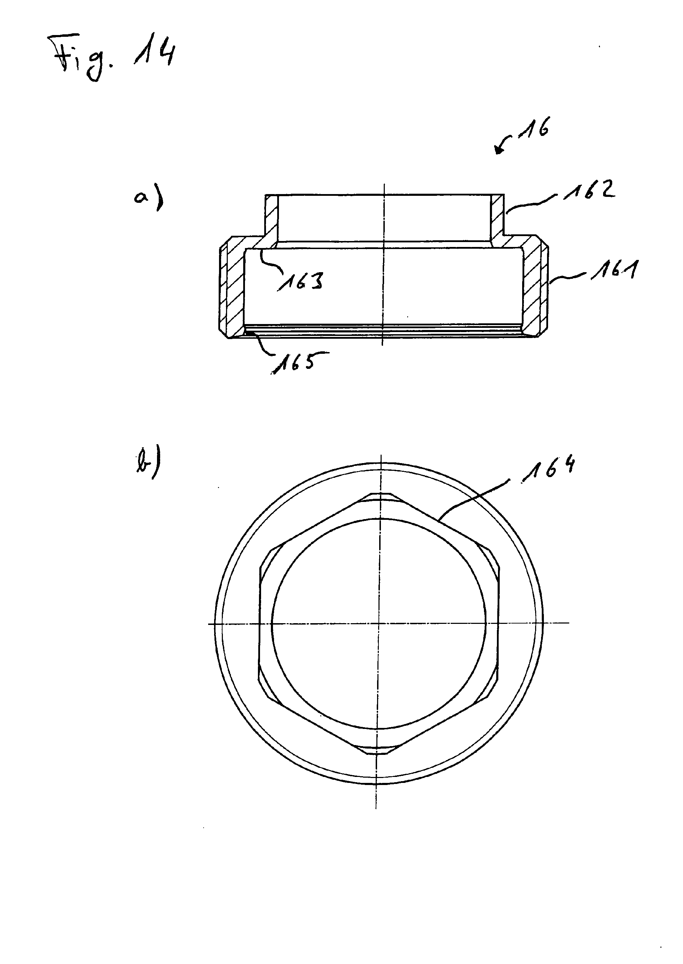

- Figur 14: den Befestigungsring der Mischerkartusche aus Figur 1
a) in Schnittdarstellung,
b) in der Draufsicht und
- Figur 15: eine Armatur zur Aufnahme der Mischerkartusche aus Figur 1
a) in der Ansicht von unten,
b) in Schnittdarstellung,
c) in der Draufsicht.

Die als Ausführungsbeispiel gewählte Einhandhebelmischerkartusche besteht im Wesentlichen aus einem Kopfstück 1, in das eine Spindel 2 axial hineinragt, die in einer drehbar gelagerten Spindelaufnahme 3 schwenkbar gelagert ist und in ein Gleitstück 4 eingreift, das mit einer Steuerscheibe 5 verbunden ist, die mit einer Durchlassscheibe 6 korrespondiert, welche über ein Dichtungsformteil 7 gegen ein Bodenstück 8 abgedichtet ist.

Das Kopfstück 1 ist hülsenartig ausgebildet und im Ausführungsbeispiel als Messingdrehteil hergestellt. An seinen dem Bodenstück 8 zugewandten Ende sind an dem Kopfstück 1 diametral zueinander zwei rechteckförmige Aussparungen 11 angeformt, die sich über eine endseitig an der Innenseite des Kopfstücks 1 eingebrachte Rastnut 12 hinaus erstrecken. An seinem den Aussparungen 11 gegenüberliegenden Ende weist das Kopfstück 1 einen durchmesserreduzierter Abschnitt 15 auf, in dem etwa mittig eine umlaufende Nut 150 eingeformt ist und der endseitig mit einer umlaufenden Nase 151 versehen ist. In den durchmesserreduzierten Abschnitt 15 sind diametral zueinander zwei Ausnehmungen 152 eingebracht, die sich bis zu der umlaufenden Nut 150 erstrecken und durch die jeweils zwei radiale Anschläge 153 gebildet sind. Die Anschläge 153 dienen der Drehbegrenzung der Spindelaufnahme 3. Innen ist durch den durchmesserreduzierten Abschnitt ein Absatz 14 gebildet. Für Ausführungsformen, bei denen das Mischungsverhältnis konstant eingestellt sein soll, können die Ausnehmungen als Bohrung ausgeführt sein, in die der Achsstift 23 der Spindel 2 eingreift, wodurch eine Drehung der Spindelaufnahme 3 blockiert ist.

Auf den durchmesserreduzierten Abschnitt 15 des Kopfstücks 1 ist weiterhin ein Befestigungsring 16 aufgestülpt. Der Befestigungsring 16 weist außen umlaufend ein Außengewinde 161 zum Einschrauben in eine Armatur 9 auf. Oberhalb des Außengewindes 161 ist ein durchmesserreduzierter Abschnitt 162 angeformt, durch den ein Anschlag 163 gebildet ist. Außen ist der durchmesserreduzierte Abschnitt 162 mit einem Außensechskant 164 versehen. An seinem dem durchmesserreduzierten Abschnitt 162 entgegengesetzten Ende ist innen in dem Befestigungsring 16 weiterhin umlaufend eine Nase 165 angeformt.

Die Spindel 2 ist im Ausführungsbeispiel im Wesentlichen quaderförmig ausgebildet. Etwa mittig ist an der Spindel 2 eine kreisringförmige koaxiale Anformung 21 zur Aufnahme eines - nicht dargestellten - Bedienteils angeformt. Unterhalb der Anformung 21 ist durch die Spindel 2 eine Bohrung 22 zur Aufnahme eines Achsstiftes 23 eingebracht. Endseitig ist an die Spindel 2 ein in Form einer Kugelscheibe ausgebildeter Steuerkopf 24 angeformt, der an seiner dem Gleitstück 4 zugewandten Seite abgeflacht ausgebildet ist.

Die Spindelaufnahme 3 ist als im Wesentlichen zylinderförmiges Kunststoffspritzgussteil ausgebildet. An seinem dem Gleitstück 4 zugewandten Ende ist an der Spindelaufnahme 3 ein zweistufiger Absatz 31 angeformt, dessen Kontur der Innenkontur des zweistufigen Absatzes 14 des Kopfstücks 1 entspricht, an der dieser anliegt. Oberhalb des zweistufigen Absatzes 31 ist durch die Spindelaufnahme 3 eine radiale Durchgangsbohrung 32 zur Aufnahme des Achsstifts 23 für die Spindel 2 eingebracht. Axial ist durch die Spindelaufnahme 3 eine Durchführung 33 für die Spindel 2 eingeformt, welche seitliche Anschläge 34 aufweist, durch die der Schwenkradius der Spindel 2 um den Achsstift 23 begrenzt ist. Die Durchführung 33 mündet in einer im Wesentlichen quaderförmig ausgebildeten Aufnahme 35 für das Gleitstück 4.

Das als Kunststoffspritzgußteil ausgeführte Gleitstück 4 ist im Wesentlichen in Form einer Kreisscheibe ausgebildet, auf der ein im Wesentlichen quaderförmiges Formstück 41 angeformt ist. Das Formstück 41 ist derart ausgebildet, dass es innerhalb der Aufnahme 35 der Spindelaufnahme 3 in Längsrichtung verschiebbar und in Querrichtung geführt ist. Axial ist durch das Gleitstück 4 das Formstück 41 durchdringend ein Langloch 42 zur Aufnahme des Steuerkopfes 24 der Spindel 2 eingebracht. An seiner dem Formstück 41 entgegengerichteten Unterseiten sind an dem Gleitstück 4 außen umlaufend weiterhin drei axiale Stege 43 zur Aufnahme der Steuerscheibe 5 angeformt.

Die Steuerscheibe 5 ist oval ausgebildet und als Keramikteil hergestellt. An seiner der Durchlassscheibe 6 zugewandten Seite weist die Steuerscheibe eine mittig angeordnete, eiförmige Einbuchtung 51 auf. Auf seiner der Einbuchtung 51 entgegengesetzten Oberseite sind in der Steuerscheibe 5 außen umlaufend weiterhin drei Ausnehmungen 52 zur Aufnahme der Stege 23 des Gleitstücks 4 eingebracht. Über die Ausnehmungen 52 ist die Steuerscheibe 5 mit dem Gleitstück 4 formschlüssig verbunden.

Die Durchlassscheibe 6 ist ebenfalls als Keramikteil ausgeführt. Durch die Durchlassscheibe 6 sind zwei Einlasskanäle 61 für kaltes bzw. warmes Wasser sowie ein relativ zu diesen vergrößert ausgebildeter Auslasskanal 62 für das Mischwasser eingebracht. Die Einlasskanäle 61 sowie der Auslasskanal 62 sind schräg zur Durchlassscheibe 6 durch diese hindurchgeführt. Seitlich sind an der Durchlassscheibe 6 versetzt zueinander drei Aussparungen 63 zur formschlüssigen Verbindung mit dem Bodenstück 8 eingebracht.

Das Dichtungsformteil 7 ist im Ausführungsbeispiel aus Gummi hergestellt. Das Dichtungsformteil 7 ist im Wesentlichen durch drei Ringe 71 gebildet, die jeweils an den beiden übrigen Ringen 71 angeformt sind, sodass eine kleeblattartige Kontur gebildet ist. An den Ringen 71 des Dichtungsformteils 7 sind an deren Oberseite sowie an deren Unterseite jeweils Dichtlippen 72 angeformt. Zur Formstabilisierung sind die Ringe 71 jeweils mit einem Stützring 73 versehen, welcher zwischen den Dichtlippen 72 der Ringe 71 angeordnet ist.

Das Bodenstück 8 ist im Wesentlichen zylinderförmig ausgebildet. In dem Bodenstück 8 sind zwei Einlassbohrungen 81 sowie eine Auslassbohrung 82 eingebracht, deren Mittelachsen ein gleichschenkliges Dreieck begrenzen, derart, dass die Bohrungen ineinander übergehen, sodass eine kleeblattartige Aufnahme 83 für das Dichtungsformteil 7 gebildet ist. An seiner dem Kopfstück 1 abgewandten Unterseite sind in dem Kopfstück zwei Positionierstifte 84 zum Eingriff in mit diesen korrespondierende Positionierbohrungen 95 einer Armatur 9 angeformt. Seitlich sind an dem Bodenstück 8 diametral zueinander zwei rechteckförmige Nasen 85 zum Eingriff in die Aussparungen 11 des Kopfstücks 1 angeformt. Seitlich der Nasen 85 sind weiterhin Rastnasen 86 zum Eingriff in die Rastnut 12 des Kopfstücks 1 angeformt. Diese Rastnasen 86 ermöglichen eine Rastverbindung zwischen dem Bodenstück 8 und dem Kopfstück 1.

Umlaufend der kleeblattartige Aufnahme 83 sind gleichmäßig beabstandet zueinander drei Stege 87 zur drehfesten Aufnahme der Durchlassscheibe 6 angeformt. Die Stege 87 greifen in die Aussparungen 63 der Durchlassscheibe 6 ein. Zur Verbesserung des Formschlusses sind an zwei Stegen 87 Nasen 88 angeformt, welche in hierzu korrespondierende Aussparungen 63 der Durchlassscheibe 6 eingreifen.

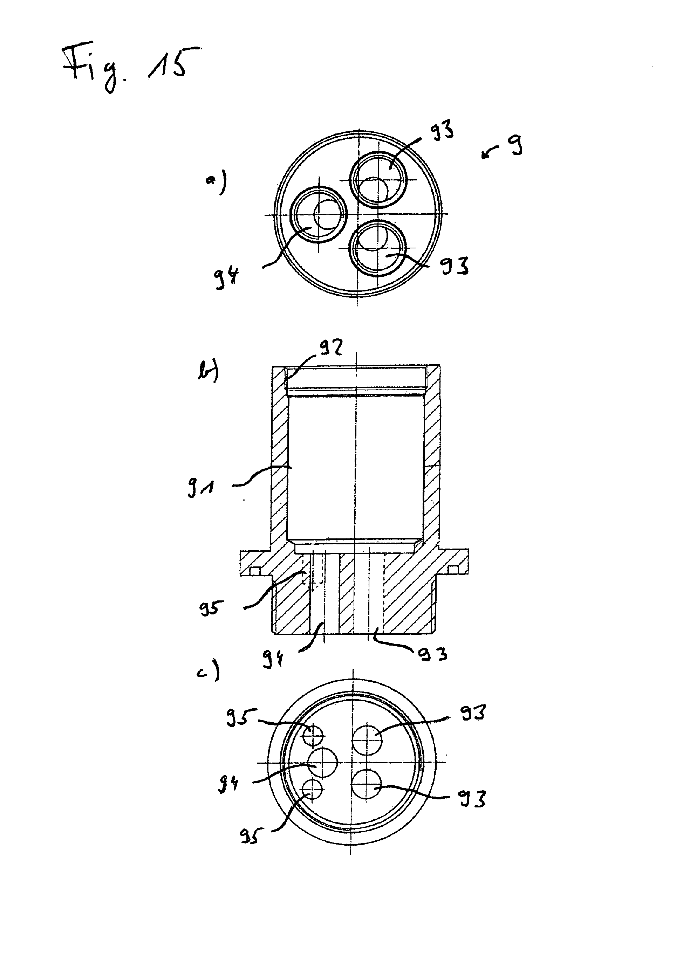

In Figur 15 ist beispielhaft eine Armatur 9 zur Aufnahme der zuvor beschriebenen Kartusche dargestellt. Die Armatur ist im Wesentlichen zylinderförmig ausgebildet und weist eine Kartuschenaufnahme 91 auf, an deren offenen Ende ein Innengewinde 92 zum Einschrauben des Befestigungsrings 16 des Kopfstücks 1 eingebracht ist. In die Kartuschenaufnahme 91 münden bodenseitig zwei Wasserzulaufanschlüsse 93 sowie ein Wasserablaufanschluss 94, deren Mittelachsen ein gleichschenkliges Dreieck bregrenzen. Beidseitig des Wasserablaufanschlusses 94 ist jeweils eine Positionierbohrung 95 zur Aufnahme der Positionierstifte 852 des Bodenstücks 8 eingebracht.

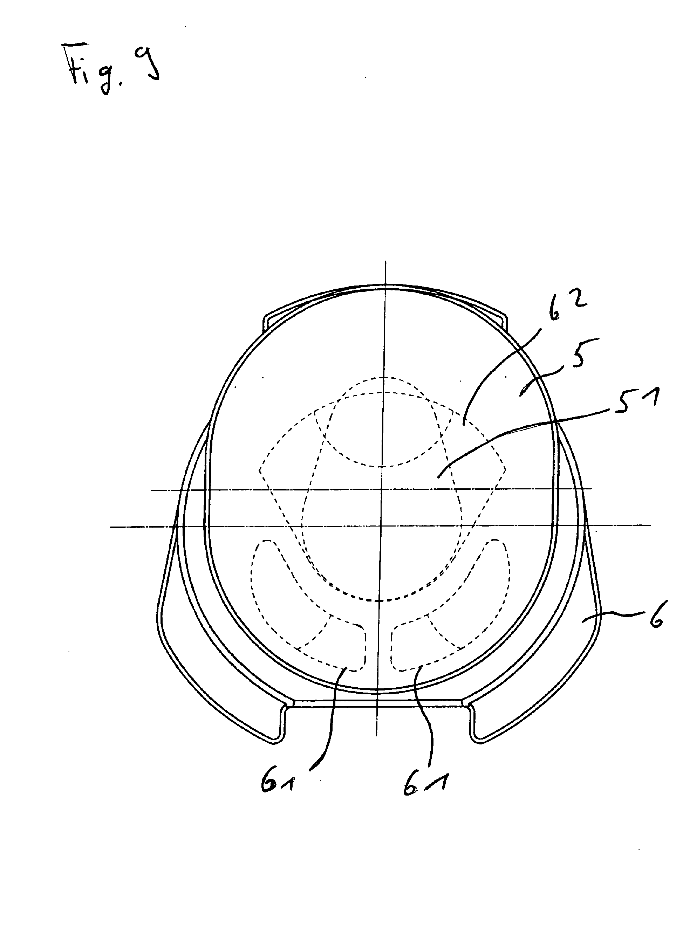

In Figuren 9 bis 11 sind verschiedene Stellungen der aus der Steuerscheibe 5 und der Durchlassscheibe 6 gebildeten Scheibensteuerung schematisch dargestellt. In der Stellung gemäß Figur 9 ist keiner der Einlasskanäle 61 der Durchlassscheibe 6 von der Einbuchtung 51 der Steuerscheibe 5 überdeckt. Die Einlasskanäle 61 sind somit durch die Steuerscheibe 5 verschlossen. Es findet kein Wasserdurchlauf statt (geschlossene Stellung).

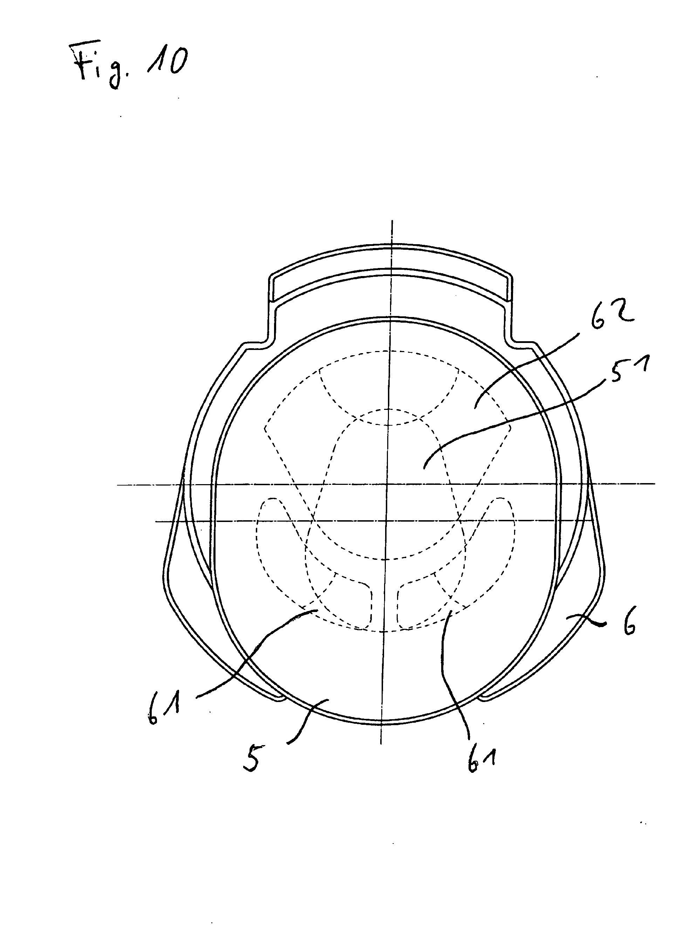

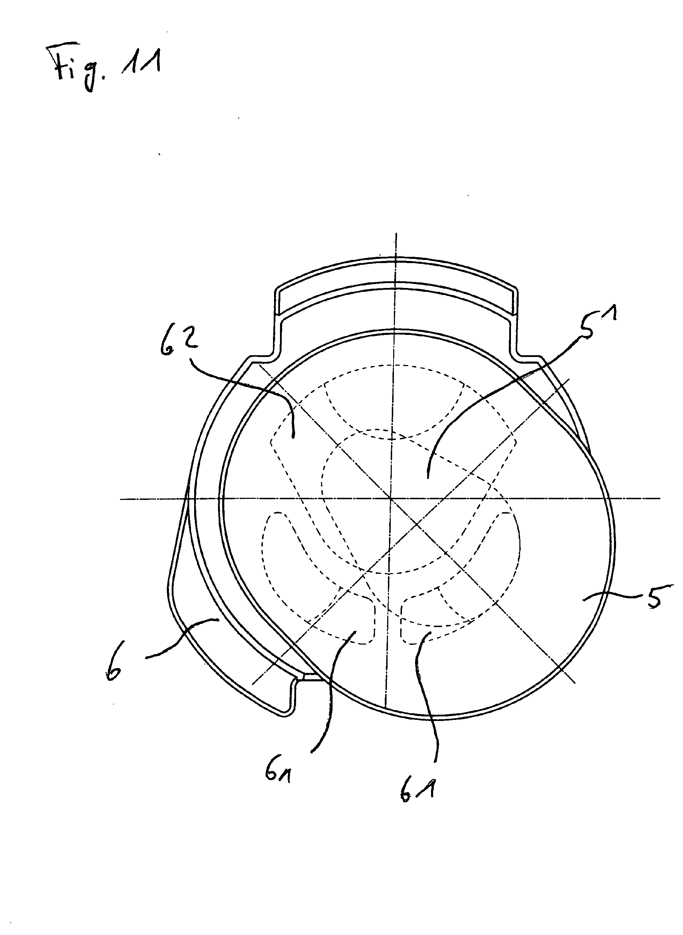

In der Stellung der Scheibensteuerung gemäß Figur 10 sind beide Einlasskanäle 61 für Warm- und Kaltwasser von der Einbuchtung 51 der Steuerscheibe 5 überdeckt, welche gleichzeitig auch den Auslasskanal 62 der Durchlassscheibe 6 überdeckt. Es findet eine Vermischung von Warm- und Kaltwasser innerhalb der Einbuchtung 51 der Steuerscheibe 5 statt, bevor das Mischwasser durch den Auslasskanal 62 der Durchlassscheibe 6 austritt. In der Position der Scheibensteuerung gemäß Figur 11 ist nur ein Einlasskanal 61 - hier der Kaltwasserzulauf - von der Einbuchtung 51 der Steuerscheibe 5 verdeckt, die diesen Einlasskanal 61 mit dem Auslasskanal 62 der Durchlassscheibe 6 verbindet. Es tritt somit nur Kaltwasser aus dem Auslasskanal 82 des Bodenstücks 8 aus.

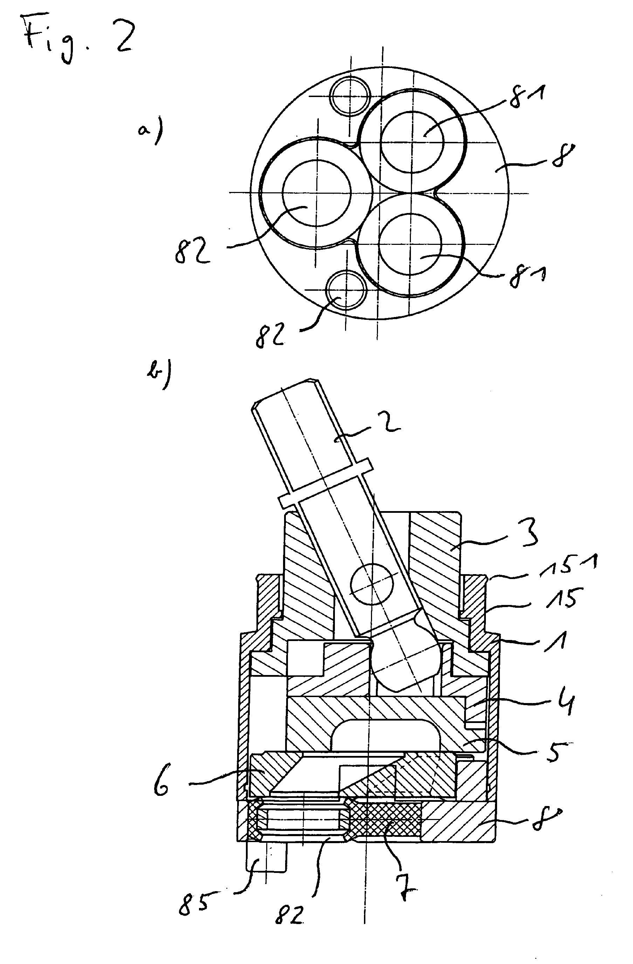

In Figur 2 ist die Anordnung mit der Scheibensteuerung gemäß Figur 10 gezeigt. Das Mischwasser tritt aus dem Auslasskanal 82 des Bodenstücks 8 aus und gelangt in montierten Zustand, bei dem die Positionierstifte 84 des Bodenstücks 8 in die Positionierbohrungen 95 der Armatur 9 eingreifen, in den Wasserablaufanschluss 94 der Armatur 9, wodurch eine bodenseitige Wasserentnahme ermöglicht ist.

Die Steuerung des aus der Auslaufsbohrung 82 des Bodenstücks 8 austretenden Wasserflusses erfolgt über die Spindel 2. Ein Verschwenken der Spindel 2 um den Achsstift 23 wird über den Steuerkopf 24 auf das Gleitstück 4 sowie auf die mit dem Gleitstück 4 formschlüssig verbundene Steuerscheibe 5 übertragen, wodurch eine Steuerung der Wassermenge bewirkt ist. Eine Drehung der Spindel 2 wird über den Achsstift 23 auf die in dem Kopfstück 1 drehbar gelagerte Spindelaufnahme 3 übertragen, welche mit dem Gleitstück 4 über das Formstück 41 formschlüssig verbunden ist. Hierdurch wird die Drehbewegung auf das Gleitstück 4 und somit auf die mit diesem formschlüssig verbundene Steuerscheibe 5 übertragen und bewirkt eine Einstellung des Mischverhältnisses der an den Einlasskanälen 61 der Durchlassscheibe 6 anliegenden Wasserströme.

Die Mischerkartusche wird über den Befestigungsring 16 mit der Armatur 9 verbunden und gegen den Boden der Kartuschenaufnahme 91 vorgespannt. Hierdurch erzielte Vorspannungskräfte bewirken einen Ausgleich von Fertigungstoleranzen der einzelnen Bauteile, insbesondere an Gleitstück 4, Steuerscheibe 5, Durchlassscheibe 6 und Bodenstück 8. Hierdurch bedingt kann es zu einem ungleichmäßigen Anpressdruck zwischen der Durchlassscheibe 6 auf der einen Seite sowie dem Bodenstück 8 auf der anderen Seite auf das Dichtungsformteil 7 kommen. Durch die elastische Ausbildung des Dichtungsformteils 7 mit den an diesem angeformten Dichtlippen 72 ist eine Lageangleichung des Dichtungsformteils 7 innerhalb der Aufnahme 88 des Bodenstücks 8 ermöglicht, wodurch eine zuverlässige Dichtwirkung gewährleistet ist. Effektiv wird durch die Durchgängigkeit der kleeblattförmigen Aufnahme 88 des Bodenstücks 8 eine Dichtwirkung des Dichtungsformteils 7 mit seinen an diesem angeformten Dichtlippen 72 zwischen den Einlass- bzw. Auslasskanälen 61, 62 der Durchlassscheibe 6 und den Wasserzulau- bzw. Wasserablaufanschlüssen 93, 94 der Armatur bewirkt. Die Dichtwirkung wird durch die mit Wasser hinterspülten Dichtlippen 72 unterstützt. Eine Formänderung der Ringe 71 des Dichtungsformteils 7, welche zu einer Beeinträchtigung der Dichtwirkung führen könnten, ist durch die in den Ringen 71 eingebrachten Stützringe 73 verhindert. Durch die Ausbildung des Kopfstücks 1 aus Messing sind Formänderungen des Kopfstücks 1 durch die Vorspannung insbesondere im Bereich des Bodenstücks 8 vermieden.

Der Befestigungsring 16 ist auf den durchmesserreduzierten Abschnitt 15 des Kopfstücks 1 übergestülpt, wobei die umlaufende Nase 151 bei Passieren der umlaufenden Nase 165 des Befestigungsrings 16 elastisch nach innen gezwängt wird. Nach Passieren der Nase 165 des Befestigungsrings 16 nimmt die Nase 151 des durchmesserreduzierten Abschnitts 15 des Kopfstücks 1 ihre ursprüngliche Position wieder ein. Der Befestigungsring 16 ist somit verliersicher an dem Kopfstück 1 gehalten. Das Einschrauben des Befestigungsrings 16 erfolgt über den Außensechskant 164.

## Patentansprüche

1. Einhandhebelmischerkartusche, umfassend ein Kopfstück (1), das ein wenigstens einen Zulaufkanal (81) und wenigstens einen Ablaufkanal (82) aufweisendes Bodenstück (8) aufnimmt, sowie eine Scheibensteuerung mit einer Steuerscheibe (5), welche über eine zumindest schwenkbar gelagerte Spindel (2) relativ zu einer drehfest angeordneten Durchlassscheibe (6) verschiebbar ist, wobei zumindest alle Zulaufkanäle (81) mit wenigstens einer Lippendichtung zur Abdichtung des Bodenstücks (8) gegenüber der Durchlassscheibe (6) und/oder gegenüber einer die Kartusche aufnehmenden Armatur (9) versehen sind, **dadurch gekennzeichnet, dass** zur Abdichtung des Bodenstücks (8) ein flexibles Formteil (7) angeordnet ist, das aus Gummi hergestellt ist und das drei mit Lippendichtungen (72) versehene Durchführungen aufweist, deren Mittelachsen ein gleichschenkliges Dreieck begrenzen, wobei die Durchführungen umgebend zwei jeweils gegenüberliegend angeordnete ringförmige Lippendichtungen angeformt sind, wobei das flexible Formteil (7) im Wesentlichen durch drei kreisförmige Ringe (71) gebildet ist, die jeweils an den beiden übrigen Ringen (71) angeformt sind und wobei in dem Bodenstück eine Ausnehmung (83) eingebracht ist, deren Innenkontur im Wesentlichen der Außenkontur des flexiblen Formteils (7) entspricht.

2. Einhandhebelmischerkartusche nach Anspruch 1, **dadurch gekennzeichnet, dass** das Bodenstück (8) wenigstens zwei Zulaufkanäle (81) aufweist und dass die Steuerscheibe (5) über eine drehbar und schwenkbar gelagerte Spindel (2) relativ zu einer drehfest angeordneten Durchlassscheibe (6) drehbar und verschiebbar ist.

3. Einhandhebelmischerkartusche nach Anspruch 2, **dadurch gekennzeichnet, dass** zwei Zulaufkanäle (81) und ein Ablaufkanal (82) derart angeordnet sind, dass ihre Mittelachsen ein gleichschenkliges Dreieck begrenzen.

4. Einhandhebelmischerkartusche nach Anspruch 2 oder 3, **dadurch gekennzeichnet, dass** in die Durchführungen des flexiblen Formteils (7) jeweils ein Stützring eingebracht ist.

5. Einhandhebelmischerkartusche nach einem der vorgenannten Ansprüche, **dadurch gekennzeichnet, dass** an dem Bodenstück umlaufend wenigstens zwei Stege angeformt sind, welche die Durchlassscheibe (6) drehfest an der wenigstens einen Lippendichtung anliegend aufnehmen.

6. Einhandhebelmischerkartusche nach Anspruch 5, **dadurch gekennzeichnet, dass** an wenigstens einem der wenigstens zwei Stege eine Nase zur Fixierung der Durchlassscheibe (6) angeformt ist.

7. Einhandhebelmischerkartusche nach einem der vorgenannten Ansprüche, **dadurch gekennzeichnet, dass** das Kopfstück (1) aus Metall, vorzugsweise aus Messing hergestellt ist.

## Claims

1. Single-hand lever mixer cartridge consisting of a head part (1) which receives a base part (8) which has at least one inlet duct (81) and at least one outlet duct (82), as well as a disk-type control system with a control disk (5) which can be shifted with reference to a fixed non-rotating passage disk (6) by means of a spindle (2) which is mounted in such a way that it can at least pivot, where at least all the inlet ducts (81) are fitted with at least one lip seal to seal the base part (8) off from the passage disk (6) and/or from a fitting (9) designed to receive the cartridge, **characterised in that** a flexible moulded part (7) is arranged to seal the base part (8), which moulded part (7) is made of rubber and has three leadthrough ducts fitted with lip seals (72), whose centre axes delimit an equilateral triangle, where two ring-shaped lip seals are arranged opposite one another and surrounding the leadthrough ducts, where the flexible forming part (7) is formed substantially by three circular rings (71), each of which are formed on the two other rings (71), and where there is a recess (83) in the base part, whose inner contour corresponds substantially to the outer contour of the flexible moulded part (7).

2. Single-hand lever mixer cartridge in accordance with claim 1, **characterised in that** the base part (8) has at least two inlet ducts (81) and that the control disk (5) can be rotated and shifted with reference to a fixed non-rotating passage disk (6) by a spindle (2) which is mounted in such a way that it can rotate and pivot.

3. Single-hand lever mixer cartridge in accordance with claim 2, **characterised in that** two inlet ducts (81) and an outlet duct (82) are arranged in such a way that their centre axes delimit an equilateral triangle.

4. Single-hand lever mixer cartridge in accordance with claim 2 or claim 3, **characterised in that** a support ring is arranged in each of the leadthrough ducts of the flexible moulded part (7).

5. Single-hand lever mixer cartridge in accordance with any of the aforementioned claims, **characterised in that** at least two webs are formed running around the base part to receive the passage disk (6) and hold it non-rotatably against the lip seal or lip seals.

6. Single-hand lever mixer cartridge in accordance with claim 5, **characterised in that** a tappet is formed on at least one of the webs in order to fix the passage disk (6) in position.

7. Single-hand lever mixer cartridge in accordance with any of the aforementioned claims, **characterised in that** the head part (1) is made of metal, preferably of brass.

## Revendications

1. Cartouche de mélangeur à levier à une main, comprenant une pièce têtière (1) recevant une pièce de fond (8) présentant au moins un canal d'afflux (81) et au moins un canal d'écoulement (82), ainsi qu'une commande avec un disque (5) à cet effet qu'il est possible de déplacer via une broche (2) en appui au moins pivotant, relativement à un disque de passage (6) agencé sans pouvoir tourner, sachant qu'au moins tous les canaux d'afflux (81) sont équipés d'au moins un joint à lèvres pour étanchéiser la pièce de fond (8) par rapport au disque de passage (6) et/ou par rapport à une armature (9) prenant la cartouche en charge, **caractérisée en ce que** pour étanchéiser la pièce de fond (8) est agencée une pièce moulée (7) fabriquée en caoutchouc et qui présente trois orifices de passage dotés de joints à lèvres (72), orifices dont les axes médians délimitent un triangle équilatéral, sachant qu'ont été moulés, se faisant respectivement face, deux joints à lèvres annulaires entourant les orifices de passage, sachant que la partie moulée (7) flexible est formée pour l'essentiel par trois bagues circulaires (71) respectivement moulées contre les deux bagues (71) restantes, et sachant que dans la pièce de fond a été ménagé un évidement (83) dont le contour intérieur correspond pour l'essentiel au contour extérieur de la pièce moulée flexible (7).

2. Cartouche de mélangeur à levier à une main selon la revendication 1, **caractérisée en ce que** la pièce de fond (8) présente au moins deux canaux d'afflux (81) et que le disque de commande (5) peut, via une broche (2) en appui lui permettant de tourner et de pivoter, tourner et se déplacer relativement à un disque de passage (6) agencé sans pouvoir tourner.

3. Cartouche de mélangeur à levier à une main selon la revendication 2, **caractérisée en ce que** deux canaux d'afflux (81) et un canal d'écoulement (82) sont agencés de telle sorte que leurs axes médians délimitent un triangle équilatéral.

4. Cartouche de mélangeur à levier à une main selon la revendication 2 ou 3, **caractérisée en ce que** dans chaque orifice de passage de la pièce moulée flexible (7) est agencé une bague d'appui.

5. Cartouche de mélangeur à levier à une main selon l'une des revendications précédentes, **caractérisée en ce qu'**au moins deux nervures ont été moulées périphériquement sur la pièce de fond, nervures qui reçoivent le disque de passage (6) en le faisant appliquer sans pouvoir tourner contre au moins un joint à lèvres.

6. Cartouche de mélangeur à levier à une main selon la revendication 5. **caractérisée en ce que** contre au moins l'une des deux nervures a été moulée une saillie pour immobiliser le disque de passage (6).

7. Cartouche de mélangeur à levier à une main selon l'une des revendications précédentes, **caractérisée en ce que** la pièce têtière (1) est fabriquée en métal, de préférence en laiton.
